# EUROPÄISCHE PATENTANMELDUNG

(11) **EP 2 312 122 A1**
(43) Veröffentlichungstag der Anmeldung: **20.04.2011**
(21) Anmeldenummer: 09013055.0
(22) Anmeldetag: 15.10.2009
(51) Int. Cl.: F01D 5/00, B23K 26/38

(54) **Referenzbestimmung zur Ermittlung der Lage von verschlossenen Löchern, Vorrichtung und Bearbeitungsvorrichtung**

(71) Anmelder: Siemens Aktiengesellschaft, 80333 München (DE)
(72) Erfinder: Bostanjoglo, Georg, Dr., 12161 Berlin (DE); Melzer-Jokisch, Torsten, 15366 Neuenhagen bei Berlin (DE); Oppert, Andreas, Dr., 14612 Falkensee (DE); Thomaidis, Dimitrios, Dr., 10367 Berlin (DE)

(57) **Zusammenfassung**

Durch das Einbringen von festen aber lösbaren Pins (4',4'') in ein Bauteil (1,120,130,155) kann durch Vergleichsmessung vor und nach dem Beschichten die Lage von Bohrachsen von Löchern (13',13'') genau ermittelt werden.

## Beschreibung

Die Erfindung betrifft die Referenzmessung zur Ermittlung der Lage von verschlossenen Löchern und entsprechende Vorrichtungen.

Bauteile, wie Turbinenschaufeln weisen Löcher auf, wobei dieses Bauteil mit den Löchern beschichtet wird. Dies kann ein Neubauteil oder ein zu reparierendes, entschichtetes Bauteil sein.
Es gibt verschieden Methoden die Löcher von dem "Coat Down" zu befreien. Eine wichtige Rolle spielt dabei die ursprüngliche Lage des Lochs, d.h. nicht nur die Querschnittsöffnung zu bestimmen, sondern auch die Orientierung wie der Neigungsverlaufs des Lochs, zu finden und an das Bearbeitungssystem zu übermitteln. Bisher ergibt es keine zufriedenstellende Lösung.
Es ist daher Aufgabe der Erfindung o. g. Problem zu lösen.

Die Aufgabe wird gelöst durch Verfahren gemäß Anspruch 1, 8 und Vorrichtungen gemäß Anspruch 10, 12.

In den Unteransprüchen sind weitere vorteilhafte Maßnahmen aufgelistet, die beliebig miteinander kombiniert werden können, um weitere Vorteile zu erzielen.

Es zeigen:
Figur 1 eine schematische Darstellung der Erfindung,
Figur 2 ein Ablauf des Verfahrens,
Figur 3 eine Turbinenschaufel,
Figur 4 eine Brennkammer,
Figur 5 eine Gasturbine,
Figur 6 eine Liste von Superlegierungen.

Die Beschreibung und die Figuren stellen nur Ausführungsbeispiele der Erfindung dar.

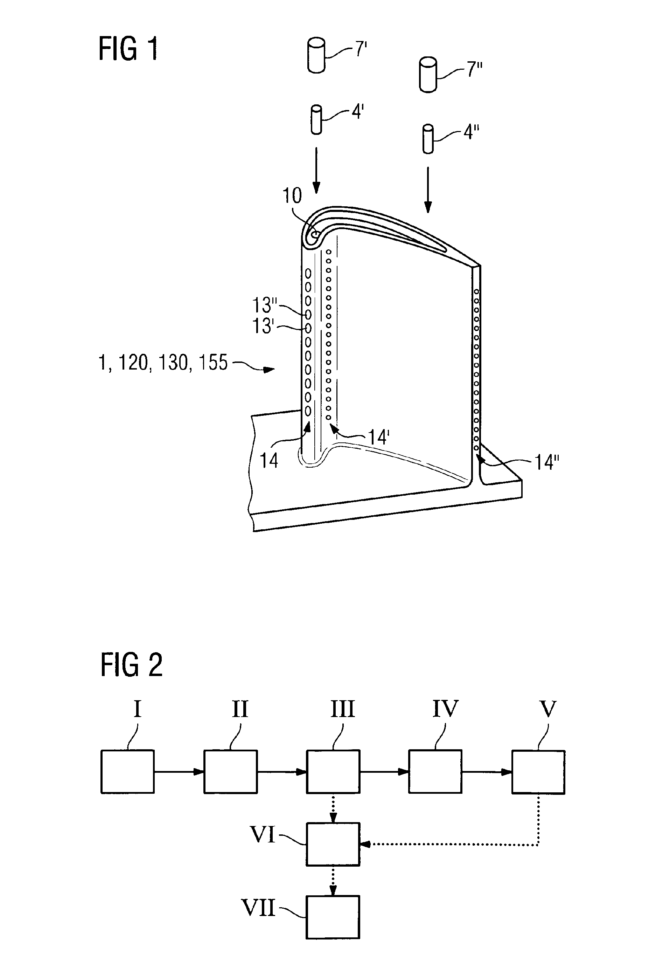

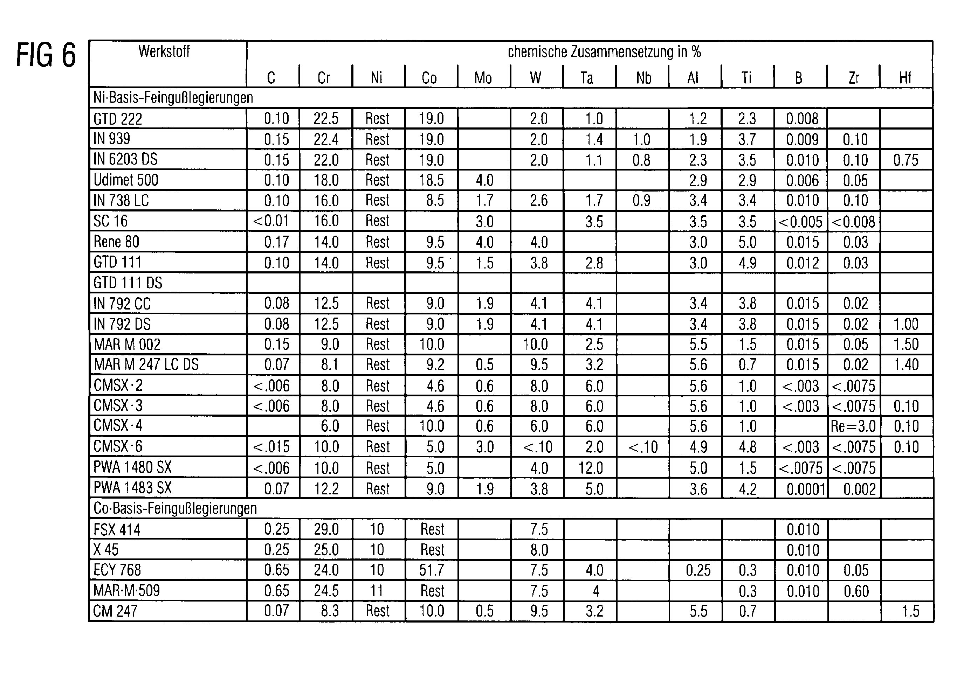

In Figur 1 ist ein Bauteil 1, 120, 130, 155 gezeigt, das zumindest ein Loch 13', insbesondere mehrere Löcher 13', 13', ..., insbesondere Filmkühllöcher 13', 13'' , ... aufweist. Insbesondere bei Turbinenschaufeln 120, 130 sind dies Filmkühllöcher.
Turbinenschaufeln 120, 130 weisen vorzugsweise nickel- oder kobaltbasierten Superlegierungen gemäß Figur 6 auf.
Das in Figur 1 gezeigte Bauteil 1, 120, 130, 155 weist keine Beschichtung auf oder soll beschichtet werden. Das kann also ein Neubauteil sein, bei dem die Filmkühllöcher 13', 13" schon eingebracht wurden oder ein beschichtetes Bauteil, das im Gebrauch war und entschichtet wurde und wieder beschichtet werden soll.

Das Bauteil 120, 130 weist mehrere Löcher 13', 13" ,.. auf, die vorzugsweise in mehreren Reihen 14, 14', 14'' angeordnet sind.
An bestimmten Stellen 10, vorzugsweise an der Schaufelspitze 415 wird zumindest ein Pin 4', insbesondere zwei Pins 4', 4" fest eingebracht. Dies ist sinnvoll, da die Krone nicht beschichtet wird. Die Stelle 10 kann ein Kühlloch im Bereich der Schaufelspitze 415 sein. Ebenso vorzugsweise kann der Pin 4' auch außerhalb von Löchern im Bereich der Schaufelspitze 415 aufgebracht werden.
Die Pins 4', 4" werden nicht in Löcher 13', 13 " des Schaufelblatts eingebracht.

Das feste Einbringen der Pins 4', 4" erfolgt vorzugsweise durch Anschweißen oder Löten.

Die Pins 4', 4" sind vorzugsweise zylinderförmig.

Als nächster Schritt wird die Ausrichtung des Kühlluftlochs 13', 13 " im unbeschichteten Zustand oder im Zustand vor der Beschichtung im Vergleich zu dem zumindest einen Pin 4', 4" , bestimmt.
Vorzugsweise wird dann nach dieser Messung und vor der Beschichtung eine Schutzkappe 7', 7" auf den zumindest einen Pin 4', 4" aufgebracht, so dass dieser 4', 4" nicht beschichtet wird.
Danach erfolgt die Beschichtung ohne Maskierung des zumindest einen Lochs 13', 13''.
Nach der Beschichtung werden die Schutzkappen 7', 7" , falls verwendet, entfernt.
Danach wird die Lage des zumindest einen Pins 4', 4" ohne Schutzkappen 7', 7" ermittelt. Durch die zuvor ermittelten Daten im unbeschichteten Zustand kann die Lage der Ausrichtung des zumindest einen Lochs 13', 13'' des beschichteten Bauteils 120, 130 ermittelt werden, so dass eine Bearbeitungseinheit, insbesondere ein Laser, die zumindest teilweise verschlossenen Kühlluftlöcher 13', 13 " wieder öffnen kann.

Das Loch 13', 13'' kann vollständig verschlossen sein oder auch keine Delle in der Beschichtung im Bereich des Lochs 13' aufweisen. Auch ein unsichtbar verschlossenes Loch 13' ist so für eine Bearbeitungsmaschine, insbesondere durch einen Laser "erkennbar".

Der Ablauf sieht wie folgt aus:
- Entschichten (I)
- Pins 4', 4 " einfügen mittellos lösbarer Verbindung (II)
- Referenzbestimmung der Längsachse der Kühllochbohrungen 13', 13 " im entschichteten Zustand (III)
- Beschichtung der Komponente mit teilweiser oder vollständiger Überdeckung der Kühllochbohrungen (IV)
- Bestimmung der Position der Pins 4', 4 " und damit der Lage der Bohrachse der Kühlluftbohrungen 13', 13 " auf dem realen Bauteil 120, 130 aufgrund der Referenzbestimmung vor der Beschichtung (V)
- Binärische Codedaten für das Wiedereröffnen der Bohrungen ohne Maschinenreferenz (VII)
- durch zentrale Recheneinheit (VI)

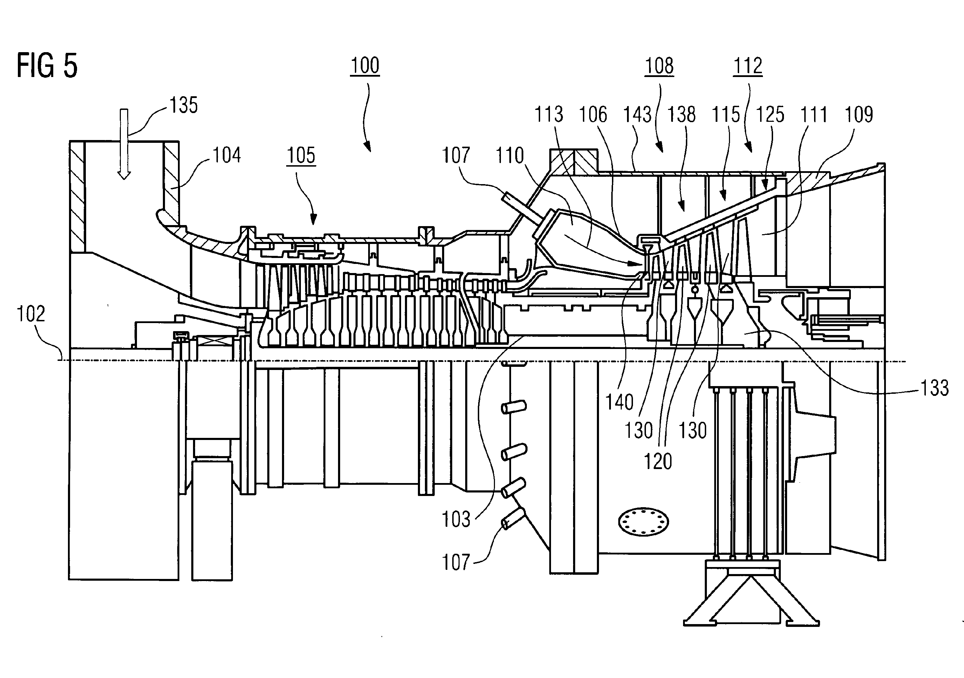

Die Figur 5 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

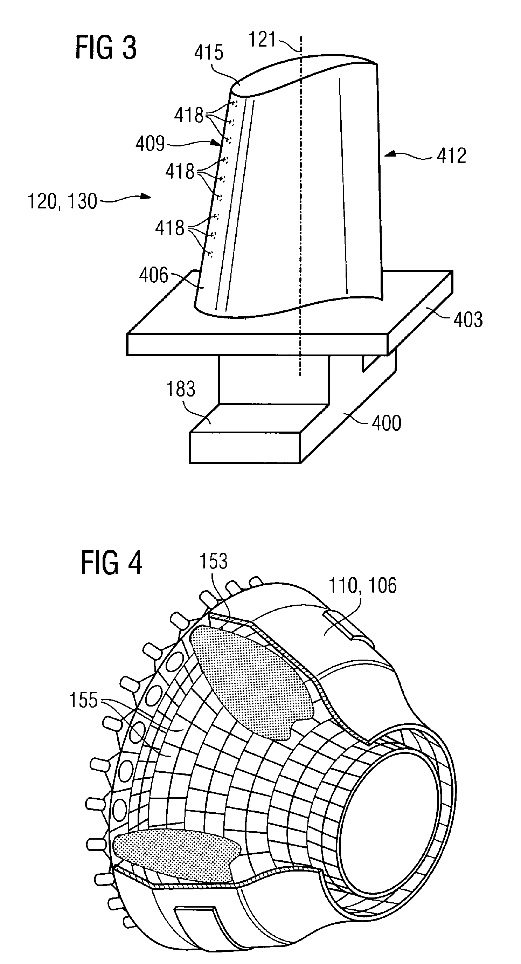

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrA1X-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrA1X-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 4 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zur Referenzlagenbestimmung von zumindest einem zumindest teilweise verschlossenen Loch (13', 13 " , ...) an zu beschichtenden Bauteilen (1, 120, 130, 155), insbesondere von Kühlluftlöchern (13', 13" , ...),
bei dem zumindest ein Pin (4', 4" ,..),
insbesondere zumindest zwei Pins (4', 4" ,..), an dem Bauteil (1, 120, 130, 155) lösbar, aber fest angebracht wird,
eine Messung der Lage des zumindest einen Pins (4', 4" ) bezüglich des Bauteils (1, 120, 130) durchgeführt wird und die Lage des zumindest einen Pins (4', 4" ,..) oder
der Abstand des zumindest einen Pins (4', 4''..) im Verhältnis gesetzt wird zu der Lage des Lochs (13', 13" ,..) und Längsachsen des Lochs (13') oder der Löcher (13', 13" ,..) vor der Beschichtung,
Messung der Lage des zumindest einen Pins (4', 4" ,..) nach der Beschichtung des Bauteils (1, 120, 130, 155),
so dass die Lage und die Längsachsen des zumindest einen zumindest teilweise verschlossenen beschichteten Lochs (13', 13" ,..) ermittelt werden kann,
wodurch ein Datensatz zur Bearbeitung des zumindest Lochs (13', 13" , ...) nach einer Beschichtung zur Wiederöffnung des Lochs (13', 13" ,..) generiert wird.

2. Verfahren nach Anspruch 1,
bei dem zumindest zwei, insbesondere nur zwei Pins (4', 4" ) verwendet werden.

3. Verfahren nach Anspruch 1 oder 2,
bei dem die Pins (4', 4",..) Schutzkappen (7', 7",..) aufweisen, die vor dem Beschichten des Bauteils (1, 120, 130, 155) aufgebracht und nach dem Beschichten und vor dem erneuten Vermessen entfernt werden.

4. Verfahren nach Anspruch 1, 2 oder 3
bei dem die Lage von nur teilweise verschlossenen Löchern (13', 13" ,..) bestimmt wird,
insbesondere nur von nur teilweise verschlossenen Löchern (13', 13'',..).

5. Verfahren nach Anspruch 1, 2, 3 oder 4,
bei dem die Lage von vollständig verschlossenen Löchern (13', 13",..),
insbesondere nur von vollständig verschlossenen Löchern (13', 13" ,..) bestimmt wird.

6. Verfahren nach Anspruch 1, 2, 3, 4 oder 5,
bei dem der zumindest eine Pin (4', 4" ,..) im Bereich der Schaufelspitze (415) eingebracht wird.

7. Verfahren nach Anspruch 1, 2, 3, 4, 5 oder 6,
bei dem der zumindest eine Pin (4', 4" ,..) zylinderförmig ist.

8. Verfahren zur Wiederherstellung von Löchern (13', 13" ), bei dem ein Verfahren nach Anspruch 1, 2, 3, 4, 5, 6 oder 7 verwendet wird,
um zumindest teilweise verschlossene Kühlluftlöcher (13', 13" , ...) zu detektieren und einen Datensatz zur Wiederöffnung zu generieren,
Wiederöffnung der Löcher (13', 13" , ...) .

9. Verfahren nach Anspruch 8,
bei dem die Löcher (13', 13'',...) mit Hilfe eines Lasers bearbeitet werden.

10. Messvorrichtung für ein Bauteil (1, 120, 130, 155), insbesondere für ein Verfahren nach Anspruch 1, 2, 3, 4, 5, 6, 7, 8 oder 9,
bei dem das Bauteil (120, 130) lösbare Pins (4', 4" ,..) aufweist,
einen Sensor zur Positionsermittlung des Pins (4', 4" ,..) und Lage zu den Löchern (13', 13'',..).

11. Messvorrichtung nach Anspruch 10,
bei der über den Pin (4', 4" ,..) Schutzkappen (7', 7" ,..) aufgebracht sind,
wobei die Schutzkappen (7', 7" ,..) nach der Beschichtung entfernt werden können,
ohne dass sich die Lage der Pins (4', 4" ,..) am Bauteil (1, 120, 130, 155) verändert.

12. Bearbeitungsvorrichtung
mit einer Messvorrichtung nach Anspruch 10 oder 11 und einer Bearbeitungsmaschine zum Öffnen der Löcher (13', 13'',..),
vorzugsweise einem Laser.
